# FASCICULE DE BREVET EUROPEEN

(11) **EP 1 912 303 B1**
(45) Date de publication et mention de la délivrance du brevet: **02.11.2011**
(21) Numéro de dépôt: 07114891.0
(22) Date de dépôt: 23.08.2007
(51) Int. Cl.: H02H 3/33

(54) **Dispositif permettant d'intervenir sur un organe de coupure associé à un dispositif différentiel résiduel en assurant la continuité de l'alimentation électrique d'une charge située en aval**
Vorrichtung, die das Eingreifen an einem Abschaltelement ermöglicht, das an eine Restfehlerstrom-Schutzvorrichtung gekoppelt ist, die die Kontinuität der Stromversorgung einer nachgelagerten Ladung sicherstellt
Device making it possible to work on a cut-off device associated with a residual differential device while guaranteeing the power supply continuity of a charge located downstream

(30) Priorité: 06.10.2006 FR 0654136
(43) Date de publication de la demande: 16.04.2008
(73) Titulaire: Société Française du Radiotéléphone-SFR, 75008 Paris (FR); Eduwatt, 75019 Paris (FR)
(72) Inventeur: Brasse, Sylvain, 78130 Les Mureaux (FR); Moraine, Jean-Claude, 14370 Bellengreville (FR); Eddi, François, 75020 PARIS (FR); Louvet, Jean-Claude, 78230, Le Pecq Sur Seine (FR)
(74) Mandataire: Jacobson, Claude

(56) Documents cités:
- EP-A1- 1 562 213
- DE-A1- 4 432 643
- DE-A1-102004 023 202

## Description

### Problème technique abordé

La présente invention concerne le domaine des installations électriques.

Plusieurs textes réglementaires prescrivent des vérifications périodiques visant les dispositifs différentiels résiduels, ci-après dénommés DDR, destinés à assurer la sécurité des personnes au sein d'installations électriques. Tester un DDR consiste à faire déclencher l'organe de coupure associé au DDR (ouverture du circuit d'alimentation) sur sa spécification différentielle en générant au travers dudit DDR un courant homopolaire de valeur croissante. La somme instantanée des courants circulant dans un DDR doit être nulle, sauf dans le cas particulier de défaut d'isolement, où une partie du courant peut reboucler par un autre chemin que le DDR. Le but du test est de vérifier le bon déclenchement de l'organe de coupure associé au DDR dans ses spécifications. Les DDR de haute sensibilité, de type 30 milliampères (mA), peuvent déclencher à partir d'une valeur de courant homopolaire supérieure ou égale à 15mA, et doivent impérativement déclencher lorsque cette valeur atteint 30mA.

Un dispositif différentiel résiduel apte à effectuer le test de déclenchement est décrit dans le document EP 1 562 213.

En pratique et ce jusqu'à présent, on constate cependant que ces vérifications ou tests sont loin d'être systématiquement effectués car ils nécessitent, au préalable, la déconnexion de la charge placée en aval de l'organe de coupure associé à un DDR. Compte tenu de la criticité de certaines charges sensibles, les responsables des installations électriques concernées refusent donc, même pendant un temps très court, une quelconque perte d'alimentation. L'inconvénient majeur est alors que, en cas de refus de réalisation des tests, les bureaux de contrôle notifient la non-validation des tests, et l'installation est déclarée hors normes.

### Solution technique

La présente invention résout cette difficulté et permet de supprimer efficacement cet inconvénient de l'art antérieur. Elle concerne un dispositif qui permet, tout en garantissant la continuité d'alimentation en énergie électrique d'une charge dite sensible :
- d'isoler et, si besoin, de remplacer un organe de coupure associé à un DDR situé en amont de la charge sensible,
- de tester un DDR, grâce à un appareil de mesure associé au dispositif dont la fonction est de provoquer le déclenchement dudit DDR et de mesurer la valeur du courant homopolaire ayant provoqué le déclenchement, ainsi que le temps d'ouverture de l'organe de coupure associé au DDR.

La présente invention, outre le fait de permettre avantageusement les interventions de test ou de maintenance sur l'organe de coupure associé au DDR lui-même, permet également de mesurer l'isolement de la distribution électrique entre la sortie de l'organe de coupure associé au DDR et la charge sensible, notamment en vue de déceler un éventuel défaut d'isolement.

La présente invention concerne un dispositif permettant, dans un circuit électrique, d'intervenir sur un organe de coupure associé à un DDR, notamment un disjoncteur différentiel ou encore un interrupteur différentiel, en assurant la continuité de l'alimentation électrique d'une charge située en son aval, caractérisé en ce qu'il comporte un transformateur d'isolement, installé en parallèle de l'organe de coupure associé à un DDR, comportant un primaire connecté à la distribution électrique en amont de l'organe de coupure associé à un DDR, via un disjoncteur de mise sous tension et un dispositif de surveillance de présence tension et un secondaire, connecté à la distribution électrique en aval de l'organe de coupure associé à un DDR et en amont de la charge, via une interface de choix sélectif de phase, un dispositif d'inversion de phase et un dispositif de couplage.

Ainsi, très avantageusement, la présente invention se caractérise par le fait que, contrairement aux méthodes et aux dispositifs de l'art antérieur, l'appareil de test permet d'effectuer la mesure de la valeur du courant homopolaire ayant provoqué le déclenchement, ainsi que la mesure du temps d'ouverture de l'organe de coupure associé au DDR bien que l'ouverture de l'organe de coupure associé au DDR n'entraîne pas, vu depuis l'appareil de test, de perte d'alimentation électrique et donc de visibilité apparente de déclenchement, du fait de la présence du dispositif.

Le transformateur d'isolement, ainsi connecté au circuit électrique, constitue une alimentation secondaire permettant de maintenir la continuité de l'alimentation électrique de la charge en respectant les phases d'alimentation électrique.

De préférence, le dispositif selon l'invention est caractérisé en ce que :
- l'interface de choix sélectif de phase est associée à un dispositif de comparaison de phases, destiné à comparer les systèmes de tension du circuit électrique situés en amont et en aval de l'organe de coupure associé à un DDR, avant activation du dispositif de couplage,
- le dispositif de couplage est associé à un dispositif de sécurité permettant de vérifier la possibilité du couplage en toute sécurité par une mesure de différence de potentiel aux bornes du dispositif de couplage.

L'interface de choix sélectif de phase, permettant de sélectionner une phase parmi les trois proposées en entrée (cas mono-mono ou tri-mono), ou les trois phases (cas tri-tri), peut être réalisée soit par des jeux de contacteurs mutuellement exclusifs et inter-verrouillés rendant impossible la commutation de phase en sortie du sélecteur, soit par un automate programmé de façon adéquate, soit encore par tout autre dispositif assurant la fonction de sélection de phase.

Le dispositif d'inversion de phase, permettant de permuter les phases en sortie du secondaire du transformateur d'isolement, peut être réalisé soit par des jeux de contacteurs mutuellement exclusifs et inter-verrouillés, soit par un automate programmé de façon adéquate, soit par tout autre dispositif assurant la fonction de permutation de phase.

Le dispositif de couplage, assurant la connexion entre les sources d'alimentation primaire et secondaire, peut être réalisé soit par un interrupteur, soit par un contacteur, soit par un quelconque autre dispositif de fermeture de circuit.

Le dispositif de comparaison de phase, permettant de comparer des systèmes de tension situés de part et d'autre du dispositif de couplage, peut être réalisé soit par un système de mesure de tension du type voltmètre mesurant la différence de potentiel phase à phase de part et d'autre du dispositif de couplage, soit par tout autre dispositif de comparaison de tension.

Le dispositif de sécurité, permettant de contrôler la faisabilité du couplage, peut être réalisé soit par un système de mesure de tension du type voltmètre mesurant la différence de potentiel phase à phase de part et d'autre du dispositif de couplage, soit par tout autre dispositif de comparaison de tension.

Le dispositif selon l'invention est avantageusement associé à un appareil de mesure.

De préférence, le dispositif selon l'invention est caractérisé en ce qu'il permet également de mesurer l'isolement de la charge située en aval de l'organe de coupure associé à un DDR. Le dispositif est caractérisé en ce que le neutre du secondaire du transformateur d'isolement est, uniquement pour la mesure de l'isolement connecté à la terre via un contrôleur permanent d'isolement, permettant de mesurer l'impédance entre le neutre et terre. Ainsi, la mesure effectuée reflète le niveau global d'isolement du circuit électrique, en aval du transformateur d'isolement, au niveau de la charge.

Le dispositif selon l'invention peut comporter deux dispositifs de mesure de l'isolement de la charge située en aval de l'organe de coupure associé à un DDR. Le premier dispositif, déjà cité au paragraphe précédent, vient connecter le neutre du secondaire du transformateur à la terre via un contrôleur permanent d'isolement, dont la fonction est de mesurer l'impédance entre le neutre et la terre. Le second dispositif de mesure d'isolement vient connecter le neutre du secondaire du transformateur directement à la terre, et mesure, grâce à un tore de mesure, le courant circulant dans le neutre.

Plusieurs variantes de réalisation sont à envisager selon que l'alimentation générale de l'installation électrique considérée est monophasée ou tétraphasée et selon que l'organe de coupure associé à un DDR à tester est monophasé ou tétraphasé.

Les cas possibles sont ci-après énumérés.

Alimentation générale monophasée et organe de coupure associé à un DDR monophasé : on distinguera ce cas par la dénomination mono-mono.

Alimentation générale tétraphasée et organe de coupure associé à un DDR monophasé : on distinguera ce cas par la dénomination tri-mono.

Alimentation générale tétraphasée et organe de coupure associé à un DDR tétraphasé : on distinguera ce cas par la dénomination tri-tri.

L'invention, avec ses caractéristiques et avantages, ressortira encore plus clairement à la lecture de la description qui va suivre, faite en référence aux dessins annexés donnés à titre d'exemples non limitatifs dans lesquels :
- la figure 1 représente un schéma de principe de l'invention dans le cadre mono-mono,
- la figure 2 représente un schéma de principe de l'invention dans le cadre tri-mono.
- la figure 3 représente un schéma de principe de l'invention dans le cadre tri-tri.

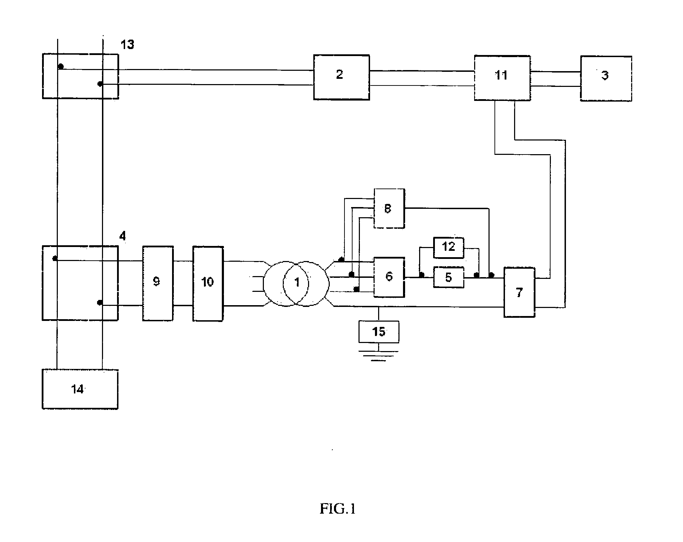

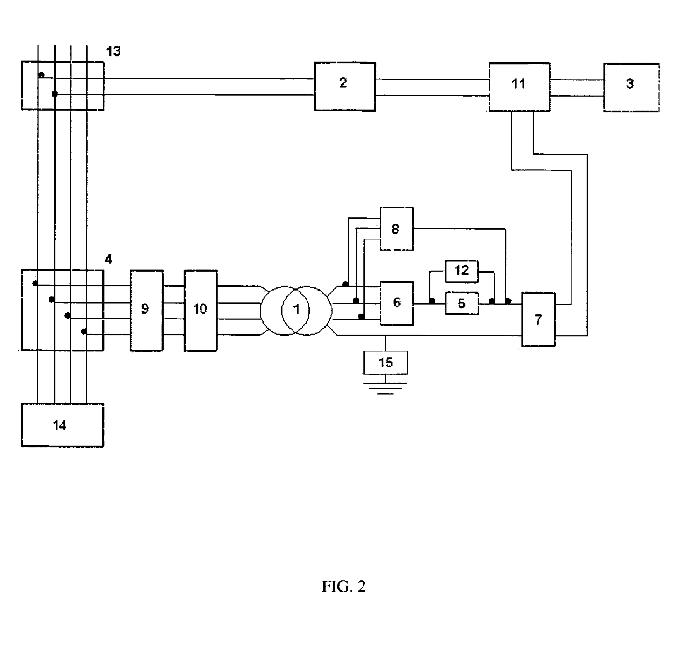

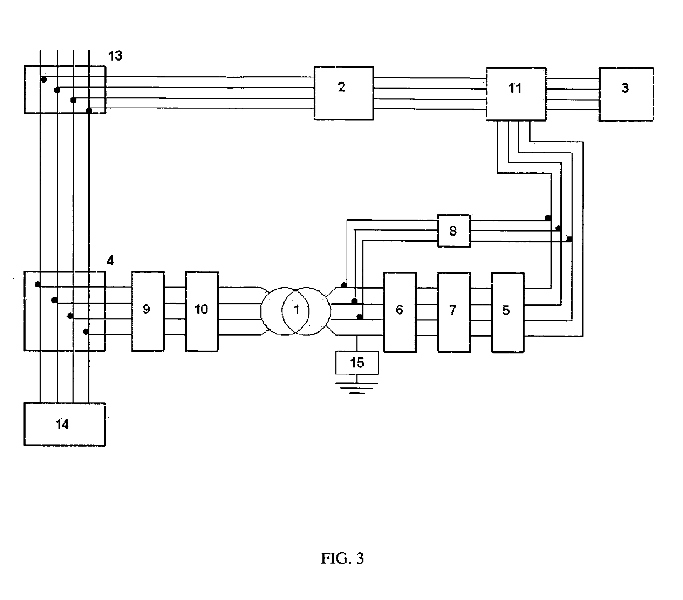

Les éléments représentés sur les figures 1, 2 et 3 sont les suivants :
1 : transformateur d'isolement
2 : organe de coupure associé à un DDR
3 : charge située en aval de l'organe de coupure associé à un DDR
4 : distribution du circuit électrique
5 : dispositif de couplage
6 : interface de choix sélectif de phase
7: dispositif d'inversion de phase
8 : dispositif de comparaison de phases
9 : disjoncteur de mise sous tension
10 : dispositif de surveillance de présence tension
11 : point de connexion du secondaire du transformateur d'isolement (en aval de l'organe de coupure associé à un DDR et en amont de la charge)
12 : dispositif de sécurité
13 : connexion du départ à l'alimentation principale
14 : alimentation générale de l'installation électrique
15 : contrôleur permanent d'isolement ou connexion du neutre à la terre

Le dispositif selon l'invention comporte, selon une première caractéristique, un transformateur d'isolement 1 venant se connecter en parallèle de l'organe de coupure associé à un DDR à tester 2, dont la fonction est d'assurer une arrivée secondaire d'alimentation électrique à la charge 3 située en aval de l'organe de coupure associé à un DDR.

Le primaire du transformateur d'isolement est connecté en amont de l'organe de coupure associé à un DDR sur la distribution du client 4 via un disjoncteur de mise sous tension 9 et un dispositif de surveillance de présence tension 10. Le secondaire du transformateur d'isolement est connecté en aval de l'organe de coupure associé à un DDR et en amont de la charge 11 via une interface de choix sélectif de phase 6, un dispositif de couplage 5, et un dispositif d'inversion de phase 7.

Afin d'assurer le bon fonctionnement de la charge 3 sous alimentation principale et/ou secondaire, il convient de faire en sorte que les systèmes de tension proposés par les deux sources d'alimentation soient de même nature, en phase et de valeur équivalente. Ce n'est qu'à cette condition que la source d'alimentation secondaire peut être couplée, grâce à un dispositif de couplage 5, à l'alimentation principale, assurant ainsi une double alimentation à la charge. Un dispositif de sécurité 12 permet de vérifier la faisabilité du couplage par une mesure de différence de potentiel aux bornes du dispositif de couplage 5. Des dispositifs de choix sélectif de phase 6 et d'inversion de phase 7 permettent de changer la nature du système de tension de l'alimentation secondaire, offrant ainsi toutes les combinaisons possibles, parmi lesquelles une et une seulement correspond au système de tension de l'alimentation principale. Cette configuration unique sera identifiée grâce à un dispositif de comparaison de phase 8 dont la fonction est de comparer les systèmes de tension de part et d'autre du dispositif de couplage 5. C'est seulement dans le cadre de cette configuration, correspondant à deux sources d'alimentation principale et secondaire parfaitement équivalentes en amont et en aval du dispositif de couplage, que celui-ci peut être fermé.

Lors de l'ouverture volontaire de l'organe de coupure associé à un DDR 2 celui-ci n'assure plus l'alimentation en énergie de la charge. C'est alors le dispositif tel que décrit ci-dessus qui assure l'alimentation en énergie de la charge 3 en respectant les phases d'alimentation.

Dans cette configuration (alimentation de la charge par le dispositif tel que décrit ci-dessus, organe de coupure associé à un DDR 2 ouvert), il est possible de procéder à une mesure d'isolement de la charge située en aval du dispositif en venant connecter le neutre du secondaire du transformateur à la terre via un contrôleur permanent d'isolement CPI ou une connexion du neutre à la terre 15. Le contrôleur permanent d'isolement aura pour fonction de mesurer l'impédance de la charge entre neutre et terre, cette valeur devant être la plus élevée possible pour un meilleur isolement. Une autre possibilité sera de venir connecter le neutre du secondaire du transformateur à la terre 15 entre neutre et terre dont la fonction sera de canaliser les courants de fuite, que l'on mesurera grâce à un tore de mesure. Les mesures ainsi effectuées reflètent le niveau global d'isolement de l'installation en aval du dispositif. Le dispositif de mesure d'isolement 15 doit obligatoirement être déconnecté pour pouvoir refermer l'organe de coupure associé à un DDR 2.

A la fin des opérations de manutention, l'organe de coupure associé à un DDR 2 peut être fermé, la charge 3 étant alimentée à la fois en direct par l'organe de coupure associé à un DDR et par le dispositif tel que décrit ci-dessus. Le dispositif peut alors être déconnecté sans que la charge 3 soit perdue.

## Revendications

1. Dispositif permettant, dans un circuit électrique, d'intervenir sur un organe de coupure associé à un dispositif différentiel résiduel, dénommé DDR (2), en assurant la continuité de l'alimentation électrique d'une charge (3) située en aval de l'organe de coupure associé à un DDR (2), **caractérisé en ce qu'**il comporte un transformateur d'isolement (1), installé en parallèle de l'organe de coupure associé au DDR (2), comportant un primaire connecté à la distribution électrique en amont de l'organe de coupure associé au DDR (2) via un disjoncteur de mise sous tension (9) et un dispositif de surveillance de présence tension (10) et un secondaire, connecté à la distribution électrique en aval de l'organe de coupure associé au DDR (2) et en amont de la charge (3), via une interface de choix sélectif de phase (6), un dispositif d'inversion de phase (7) et un dispositif de couplage (5), de sorte que le transformateur d'isolement, ainsi connecté à la distribution électrique, constitue une alimentation secondaire permettant de maintenir la continuité de l'alimentation électrique de la charge en respectant les phases d'alimentation électrique.

2. Dispositif selon la revendication 1 **caractérisé en ce que** :
- l'interface de choix sélectif de phase (6) est associée à un dispositif de comparaison de phases (8), destiné à comparer les systèmes de tension du circuit électrique situés en amont et en aval de l'organe de coupure associé au DDR (2), avant activation du dispositif de couplage,
- le dispositif de couplage (5) est associé à un dispositif de sécurité (12) permettant de vérifier la possibilité du couplage en toute sécurité par une mesure de différence de potentiel aux bornes du dispositif de couplage (5).

3. Dispositif selon les revendications 1 ou 2, plus particulièrement destiné à mesurer l'isolement de la charge (3) située en aval de l'organe de coupure associé au DDR (2), **caractérisé en ce que** le neutre du secondaire du transformateur d'isolement (1) est connecté à la terre soit via un contrôleur permanent d'isolement (15) permettant de mesurer l'impédance entre le neutre et terre, soit en direct afin de mesurer grâce à un tore de mesure de courant, le courant de fuite circulant dans le neutre, de sorte que la mesure ainsi effectuée reflète le niveau global d'isolement du circuit électrique, en aval du transformateur d'isolement (1), au niveau de la charge (3).

## Claims

1. A device making it possible, in an electric circuit, to work on a cut-off device associated with a residual differential device, referred to as DDR (2), while guaranteeing the power supply continuity of a charge (3) located downstream of the cut-off device associated with a DDR (2), **characterised in that** it comprises an isolating transformer (1) fitted parallel to the cut-off device associated with the DDR (2), comprising a a primary side connected to the harness upstream of the cut-off device associated with the DDR (2) via a charging circuit-breaker (9) and a voltage presence monitoring device (10), and a secondary side connected to the harness downstream of the cut-off device associated with the DDR (2) and upstream of the charge (3) via a phase selecting interface (6), a phase inversion device (7) and a coupling device (5) such that the isolating transformer, thus connected to the harness, forms a secondary power supply making it possible to maintain the continuity of the power supply of the charge while respecting the power supply phases.

2. The device according to Claim 1, **characterised in that**:
- the phase selecting interface (6) is associated with a phase comparison device (8) for comparing the electric circuit voltage systems located upstream and downstream of the cut-off device associated with the DDR (2) before activating the coupling device,
- the coupling device (5) is associated with a safety device (12) making it possible to check the possibility of coupling safely by measuring the potential difference at the terminals of the coupling device (5).

3. The device according to Claims 1 or 2, more particularly for measuring the isolation of the charge (3) located downstream of the cut-off device associated with the DDR (2), **characterised in that** the neutral of the secondary side of the isolating transformer (1) is connected to earth either via a permanent isolation controller (15) making it possible to measure the impedance between neutral and earth, or directly in order to measure by means of a torus for measuring current, the leakage current circulating in the neutral such that the measurement thus taken reflects the overall isolation level of the electric circuit downstream of the isolating transformer (1) at the charge (3).

## Patentansprüche

1. Vorrichtung in einer elektrischen Schaltungsanordnung, die das Eingreifen an einem Abschaltelement ermöglicht, das an eine als DDR (2) bezeichnete Restfehlerstrom-Schutzvorrichtung gekoppelt ist, wodurch die Kontinuität der Stromversorgung einer dem mit einer DDR (2) gekoppelten Abschaltelement nachgelagerten Last (3) sichergestellt wird, **dadurch gekennzeichnet, dass** sie einen parallel zu dem mit der DDR (2) gekoppelten Abschaltelement angebrachten Trenntransformator (1) umfasst, der einen Primärstromkreis, der vor dem mit der DDR (2) gekoppelten Abschaltelement über einen Leistungseinschalter (9) und eine Spannungsüberwachungseinrichtung (10) mit der Stromverteilung verbunden ist, und einen Sekundärstromkreis umfasst, der nach dem mit der DDR (2) gekoppelten Abschaltelement und vor der Last (3) über eine Schnittstelle (6) zur selektiven Phasenwahl, eine Vorrichtung (7) zur Phasenumkehr und eine Kopplungsvorrichtung (5) mit der Stromverteilung verbunden ist, so dass der auf diese Weise mit der Stromverteilung verbundene Trenntransformator eine Sekundärstromversorgung darstellt, die es ermöglicht, die Stromversorgung der Last unter Berücksichtigung der Phasen der Stromversorgung aufrecht zu erhalten.

2. Vorrichtung gemäß Anspruch 1, **dadurch gekennzeichnet, dass**:
- die Schnittstelle (6) zur selektiven Phasenwahl an eine Phasenvergleichsvorrichtung (8) gekoppelt ist, die zum Vergleichen der dem mit der DDR (2) gekoppelten Abschaltelement vor- und nachgelagerten Spannungssysteme des Stromkreises vor der Aktivierung des Abschaltelements bestimmt ist, und
- die Kopplungsvorrichtung (5) an eine Sicherheitsvorrichtung (12) gekoppelt ist, wodurch die Möglichkeit der sicheren Kopplung durch eine Messung der Potentialdifferenz an den Anschlüssen der Kopplungsvorrichtung (5) geprüft werden kann.

3. Vorrichtung gemäß den Ansprüchen 1 oder 2, die insbesondere zum Messen der Isolierung der dem mit einer DDR (2) gekoppelten Abschaltelement nachgelagerten Last (3) bestimmt ist, **dadurch gekennzeichnet, dass** der Nullleiter der Sekundärseite des Trenntransformators (1) entweder über eine Einrichtung (15) zur ständigen Isolationsüberwachung, die das Messen der Impedanz zwischen Nullleiter und Erde ermöglicht, oder direkt mit der Erde verbunden ist, um mittels einer Strommessspule den im Nullleiter fließenden Fehlerstrom zu messen, so dass die auf diese Weise ausgeführte Messung die Gesamthöhe der Isolierung des elektrischen Stroms nach dem Trenntransformator (1) an der Last (3) widerspiegelt.
